# EUROPEAN PATENT SPECIFICATION

(11) **EP 4 583 099 B1**
(45) Date of publication and mention of the grant of the patent: **14.01.2026**
(21) Application number: 24223331.0
(22) Date of filing: 27.12.2024
(51) Int. Cl.: G10L 15/06, G10L 15/16, G06N 3/045

(54) **METHOD AND SYSTEM FOR AUGMENTED SPEECH EMBEDDINGS-BASED AUTOMATIC SPEECH RECOGNITION**
VERFAHREN UND SYSTEM ZUR AUTOMATISCHEN SPRACHERKENNUNG AUF DER BASIS VON ERWEITERTEN SPRACH-EMBEDDINGS
PROCÉDÉ ET SYSTÈME POUR LA RECONNAISSANCE AUTOMATIQUE DE LA PAROLE BASÉE SUR DES EMBEDDINGS VOCALES AUGMENTÉES

(30) Priority: 03.01.2024 IN 202421000499
(43) Date of publication of application: 09.07.2025
(73) Proprietor: Tata Consultancy Services Limited, Maharashtra (IN)
(72) Inventor: PANDA, ASHISH, 400601 Thane (W), Maharashtra (IN); KOPPARAPU, SUNIL KUMAR, 400601 Thane (W), Maharashtra (IN)
(74) Representative: Goddar, Heinz J.

(56) References cited:
- YU NAKAGOME ET AL: "InterAug: Augmenting Noisy Intermediate Predictions for CTC-based ASR", ARXIV.ORG, CORNELL UNIVERSITY LIBRARY, 201 OLIN LIBRARY CORNELL UNIVERSITY ITHACA, NY 14853, 1 April 2022 (2022-04-01), XP091198686
- TATIANA LIKHOMANENKO ET AL: "CAPE: Encoding Relative Positions with Continuous Augmented Positional Embeddings", ARXIV.ORG, CORNELL UNIVERSITY LIBRARY, 201 OLIN LIBRARY CORNELL UNIVERSITY ITHACA, NY 14853, 6 June 2021 (2021-06-06), XP081985214

## Description

### CROSS-REFERENCE TO RELATED APPLICATIONS AND PRIORITY

The present application claims priority to Indian application no. 202421000499, filed on January 03, 2024.

### TECHNICAL FIELD

The disclosure herein generally relates to the field of Natural Language Processing (NLP) and, more particularly, to a method and system for augmented speech embeddings based automatic speech recognition.

### BACKGROUND

Data augmentation plays a significant role in making Automatic Speech Recognition (ASR) systems robust towards unseen data. Conformer based ASR systems have set new benchmarks and the contribution of the data augmentation schemes to these benchmark performances have been significant. The data augmentation schemes either create new data or transform the existing data which improves the diversity of the training data resulting in improved performance of ASR on unseen data. There have been numerous studies addressing the data augmentation policies for ASR systems.

Conventional methods like Speed Perturbation (SP) creates multiple instances of the speech signal which differ in speed. This is an example of an augmentation scheme which creates additional data and has to be performed offline. Vocal Tract Length Perturbation (VTLP) transforms speech data by linearly warping the spectrograms by a random warp factor. During the decode phase, VTLP generates several warped versions of the test data and averages the prediction over all the generated versions. In another approach, different versions of relatively clean training data are created for different room dimensions and different reverberation time. This way, it ensures that the training examples are virtually never repeated. For noise robust ASR, speech signals corrupted by artificial noise are augmented during training. The corrupted speech signals are, then, used to train the acoustic model, which provide significant improvement in ASR performance in noisy conditions. Recently, Spec Augment (SA) has received a lot of attention. SA transforms the Mel-spectrogram of a speech signal and has three components: time warp, time mask and frequency mask. It has very little computational overhead, does not create additional data and provides remarkable improvement in ASR performance. Even though there are many approaches that exists for automatic speech recognition, the conventional approaches lose accuracy while recognizing unknown speech signals. Document "InterAug: Augmenting Noisy Intermediate Predictions for CTC-based ASR", arXiv.org:2204.00174, 1 April 2022, authored by Nakagome et al, discloses InterAug:
a novel training method for CTC-based ASR using augmented intermediate representations for conditioning. The proposed method exploits the conditioning framework of self-conditioned CTC to train robust models by conditioning with "noisy" intermediate predictions. During the training, intermediate predictions are changed to incorrect intermediate predictions, and fed into the next layer for conditioning. The subsequent layers are trained to correct the incorrect intermediate predictions with the intermediate losses. By repeating the augmentation and the correction, iterative refinements, which generally require a special decoder, can be realized only with the audio encoder. To produce noisy intermediate predictions, we also introduce new augmentation: intermediate feature space augmentation and intermediate token space augmentation that are designed to simulate typical errors. The combination of the proposed InterAug framework with new augmentation allows explicit training of the robust audio encoders. In experiments using augmentations simulating deletion, insertion, and substitution error, we confirmed that the trained model acquires robustness to each error, boosting the speech recognition performance of the strong self-conditioned CTC baseline. Index Terms: non-autoregressive, connectionist temporal classification, data augmentation, end-to-end speech recognition (Abstract).
Document "CAPE: Encoding Relative Positions with Continuous Augmented Positional Embeddings", arXiv.org:2106.03143, 6 June 2021, authored by Likhomanenko et al, discloses: Without positional information, attention-based transformer neural networks are permutation-invariant. Absolute or relative positional embeddings are the most popular ways to feed transformer models positional information. Absolute positional embeddings are simple to implement, but suffer from generalization issues when evaluating on sequences of different length than those seen at training time. Relative positions are more robust to length change, but are more complex to implement and yield inferior model throughput. In this paper, we propose an augmentation-based approach (CAPE) for absolute positional embeddings, which keeps the advantages of both absolute (simplicity and speed) and relative position embeddings (better generalization). In addition, our empirical evaluation on state-of-the-art models in machine translation, image and speech recognition demonstrates that CAPE leads to better generalization performance as well as increased stability with respect to training hyper-parameters (Abstract).

### SUMMARY

Embodiments of the present disclosure present technological improvements as solutions to one or more of the above-mentioned technical problems recognized by the inventors in conventional systems. The invention is set forth in the appended independent claims. Preferred embodiments of the invention are set forth in the appended dependent claims. For example, in one embodiment, in accordance with the invention, a method for augmented speech embeddings based automatic speech recognition is provided. The method includes receiving, by one or more hardware processors, a speech waveform comprising a plurality of speech signals from an audio recording device. Further, the method includes generating, by the one or more hardware processors, a plurality of speech frames based on the speech waveform by preprocessing the speech waveform using a preprocessing technique. Furthermore, the method includes generating, by the one or more hardware processors, a transformed speech signal corresponding to each of the plurality of speech frames by applying Fourier Transform (FT) on each of the plurality of speech frames. Furthermore, the method includes generating, by the one or more hardware processors, a log Mel spectrogram associated with each of the plurality of speech frames by passing the transformed speech signal corresponding to each of the plurality of speech frames through a Mel filter bank and thereby computing logarithm of each output of the Mel-filter bank. Finally, the method includes converting, by the one or more hardware processors, the speech waveform into a corresponding textual information based on the log Mel spectrogram associated with each of the plurality of speech frames using a random noise augmented trained encoder-decoder model, wherein method steps for training the random noise augmented encoder-decoder model comprises: (i) receiving a plurality of training log Mel spectrograms associated with a plurality of training speech waveforms by an encoder-decoder model (ii) extracting a plurality of speech embeddings based on the plurality of training log Mel spectrograms from a plurality of hidden layers associated with the encoder-decoder model (iii) selecting a set of random speech embeddings from among the plurality of speech embeddings (iv) generating a plurality of augmented speech embeddings by replacing the set of random speech embeddings with a randomly generated Gaussian noise and (v) training the encoder-decoder model based on the plurality of augmented speech embeddings until a predefined threshold.

In another aspect, in accordance with the invention, a system for augmented speech embeddings based automatic speech recognition is provided. The system includes at least one memory storing programmed instructions, one or more Input /Output (I/O) interfaces, and one or more hardware processors operatively coupled to the at least one memory, wherein the one or more hardware processors are configured by the programmed instructions to receive a speech waveform comprising a plurality of speech signals from an audio recording device. Further, the one or more hardware processors are configured by the programmed instructions to generate a plurality of speech frames based on the speech waveform by preprocessing the speech waveform using a preprocessing technique. Furthermore, the one or more hardware processors are configured by the programmed instructions to generate a transformed speech signal corresponding to each of the plurality of speech frames by applying Fourier Transform (FT) on each of the plurality of speech frames. Furthermore, the one or more hardware processors are configured by the programmed instructions to generate a log Mel spectrogram associated with each of the plurality of speech frames by passing the transformed speech signal corresponding to each of the plurality of speech frames through a Mel filter bank and thereby computing logarithm of each output of the Mel-filter bank. Finally, the one or more hardware processors are configured by the programmed instructions to convert the speech waveform into a corresponding textual information based on the log Mel spectrogram associated with each of the plurality of speech frames using a random noise augmented trained encoder-decoder model, wherein method steps for training the random noise augmented encoder-decoder model comprises: (i) receiving a plurality of training log Mel spectrograms associated with a plurality of training speech waveforms by an encoder-decoder model (ii) extracting a plurality of speech embeddings based on the plurality of training log Mel spectrograms from a plurality of hidden layers associated with the encoder-decoder model (iii) selecting a set of random speech embeddings from among the plurality of speech embeddings (iv) generating a plurality of augmented speech embeddings by replacing the set of random speech embeddings with a randomly generated Gaussian noise and (v) training the encoder-decoder model based on the plurality of augmented speech embeddings until a predefined threshold.

In yet another aspect, in accordance with the invention, a computer program product including a non-transitory computer-readable medium having embodied therein a computer program for augmented speech embeddings based automatic speech recognition is provided. The computer readable program, when executed on a computing device, causes the computing device to receive a speech waveform comprising a plurality of speech signals from an audio recording device. Further, the computer readable program, when executed on a computing device, causes the computing device to generate a plurality of speech frames based on the speech waveform by preprocessing the speech waveform using a preprocessing technique. Furthermore, the computer readable program, when executed on a computing device, causes the computing device to generate a transformed speech signal corresponding to each of the plurality of speech frames by applying Fourier Transform (FT) on each of the plurality of speech frames. Furthermore, the computer readable program, when executed on a computing device, causes the computing device to generate a log Mel spectrogram associated with each of the plurality of speech frames by passing the transformed speech signal corresponding to each of the plurality of speech frames through a Mel filter bank and thereby computing logarithm of each output of the Mel-filter bank. Finally, the computer readable program, when executed on a computing device, causes the computing device to convert the speech waveform into a corresponding textual information based on the log Mel spectrogram associated with each of the plurality of speech frames using a random noise augmented trained encoder-decoder model, wherein method steps for training the random noise augmented encoder-decoder model comprises: (i) receiving a plurality of training log Mel spectrograms associated with a plurality of training speech waveforms by an encoder-decoder model (ii) extracting a plurality of speech embeddings based on the plurality of training log Mel spectrograms from a plurality of hidden layers associated with the encoder-decoder model (iii) selecting a set of random speech embeddings from among the plurality of speech embeddings (iv) generating a plurality of augmented speech embeddings by replacing the set of random speech embeddings with a randomly generated Gaussian noise and (v) training the encoder-decoder model based on the plurality of augmented speech embeddings until a predefined threshold.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A is a functional block diagram of a system for augmented speech embeddings based automatic speech recognition, in accordance with some embodiments of the present disclosure.
FIG. 1B illustrates a broad level functional architecture of the system for augmented speech embeddings based automatic speech recognition, in accordance with some embodiments of the present disclosure.
FIG. 2 illustrates a flow diagram for a processor implemented method for augmented speech embeddings based automatic speech recognition, in accordance with some embodiments of the present disclosure.
FIG. 3A through FIG. 3C illustrates experimental results for the processor implemented method for augmented speech embeddings based automatic speech recognition, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts.

Most of the existing data augmentation techniques are designed to work on the raw speech features. Though several data augmentation techniques have been explored in the signal or feature space, very few studies have explored augmentation in the embedding (i.e. output of the hidden layers) space for Automatic Speech Recognition (ASR). The outputs of the hidden layers of a neural network can be seen as different representations or projections of the features. The augmentations performed on the features may not necessarily translate into augmentation of the different projections of the features as obtained from the output of the hidden layers. For example, simulating missing speech segment by replacing speech frames with zeros may not translate into zero embeddings. Therefore, augmentation in the embedding domain may further enhance the network's performance on unseen data. One approach attempts some form of embedding augmentation called Inter- Aug which uses the bounding box annotation effectively, where intermediate noisy Connectionist temporal classification (CTC) predictions are augmented by a SA like frequency and time masking. However, the conventional approaches are facing challenges in recognizing unknown speech signals.

To overcome the challenges of the conventional approaches, embodiments herein provide a method and system for augmented speech embeddings based automatic speech recognition. The present disclosure provides an augmentation scheme which works on the speech embeddings. The augmentation works by replacing a set of randomly selected embeddings by noise signal during training. It does not require additional data, works online during training, and adds very little to the overall computational cost.

For example, in the present disclosure, a randomly selected subset of the embeddings are replaced by randomly generated Gaussian noise (G). This simulates partial loss of speech segments in the temporal direction, forcing the network to learn prediction with incomplete and missing data. This augmentation policy adds very little to the computational complexity and does not create additional data. Further, it was observed during experimentation that the augmentation policy of the present disclosure, when used in conjunction with Speech Augmentation (SA), provides significant reduction in Word Error Rate (WER) compared to SA alone. The main contributions of the present disclosure are: (i) a simple, yet effective, policy for speech Embeddings Augmentation (EA) (ii) Exploring the optimal size of the embeddings subset to be augmented (iii) Using EA in conjunction with SA (iv) The present disclosure's EA policy is used with multi-task learning with Connectionist Temporal Classification (CTC) and attention loss for improved performance.

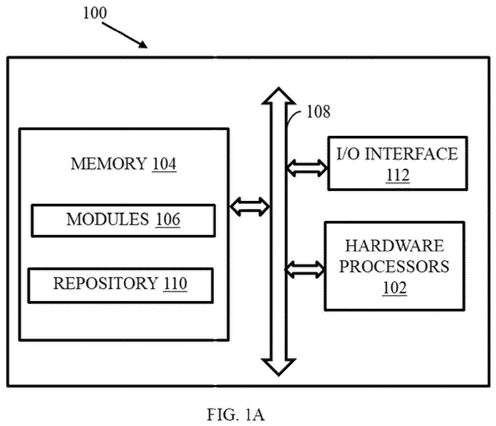

Referring now to the drawings, and more particularly to FIG. 1A through FIG. 3C, where similar reference characters denote corresponding features consistently throughout the figures, there are shown preferred embodiments, and these embodiments are described in the context of the following exemplary system and/or method.

FIG. 1A is a functional block diagram of a system 100 for augmented speech embeddings based automatic speech recognition, in accordance with some embodiments of the present disclosure. The system 100 includes or is otherwise in communication with hardware processors 102, at least one memory such as a memory 104, an Input /Output (I/O) interface 112. The hardware processors 102, memory 104, and the I/O interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, memory 104 includes a plurality of modules 106. Memory 104 also includes a data repository (or repository) 110 for storing data processed, received, and generated by the plurality of modules 106.

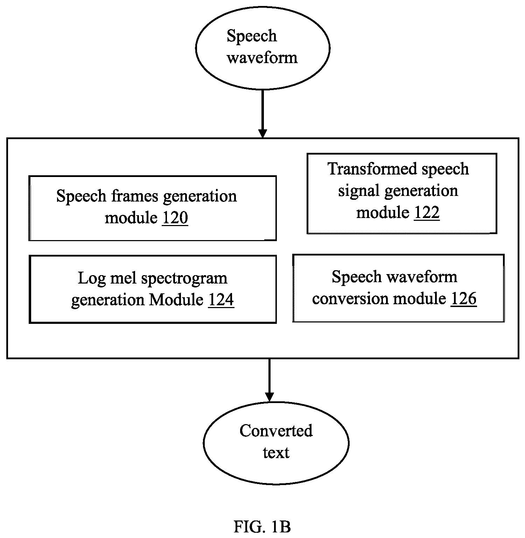

The plurality of modules 106 includes programs or coded instructions that supplement applications or functions performed by the system 100 for augmented speech embeddings based automatic speech recognition. The plurality of modules 106, amongst other things, can include routines, programs, objects, components, and data structures, which perform particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for augmented speech embeddings based automatic speech recognition. For example, the plurality of modules includes a speech frames generation module 120 (shown in FIG. 1B), a transformed speech signal generation module 122 (shown in FIG. 1B), a log Mel spectrogram generation module 124 (shown in FIG. 1B) and a speech waveform conversion module 126 (shown in FIG. 1B).

FIG. 1B illustrates a broad level functional architecture of the system 100 for augmented speech embeddings based automatic speech recognition, in accordance with some embodiments of the present disclosure.

The data repository (or repository) 110 may include a plurality of abstracted pieces of code for refinement and data that is processed, received, or generated as a result of the execution of the plurality of modules in the module(s) 106.

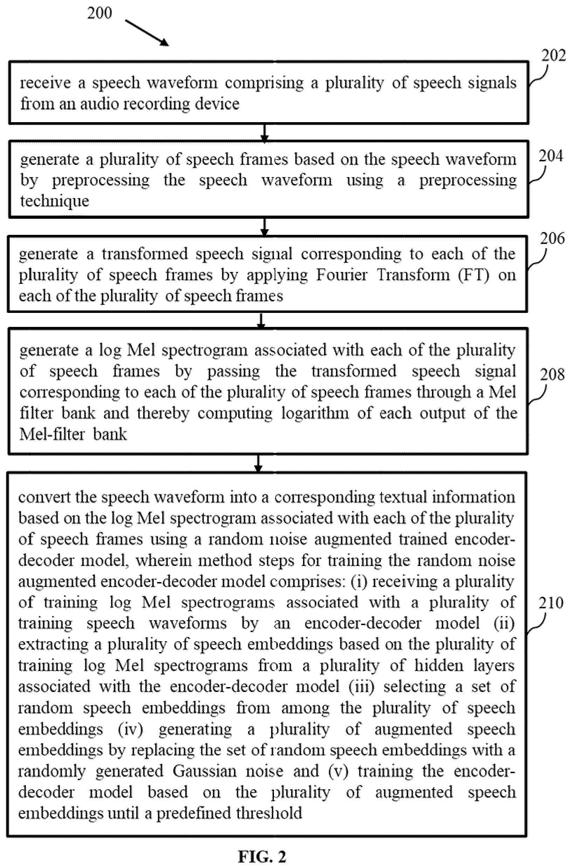

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). The working of the components of the system 100 are explained with reference to the method steps depicted in FIG. 2.

FIG. 2 is an exemplary flow diagrams illustrating a method 200 for augmented speech embeddings based automatic speech recognition implemented by the system of FIG. 1A according to some embodiments of the present disclosure. In an embodiment, the system 100 includes one or more data storage devices or the memory 104 operatively coupled to the one or more hardware processor(s) 102 and is configured to store instructions for execution of steps of the method 200 by the one or more hardware processors 102. The steps of method 200 of the present disclosure will now be explained with reference to the components or blocks of system 100 as depicted in FIG. 1A and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types. Method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

At step 202 of method 200, one or more hardware processors 102 are configured by the programmed instructions to receive a speech waveform comprising a plurality of speech signals from an audio recording device.

At step 204 of the method 200, the speech frames generation module 120, when executed by the one or more hardware processors 102, is configured by the programmed instructions to generate a plurality of speech frames based on the speech waveform by preprocessing the speech waveform using a preprocessing technique. The preprocessing technique for generating the plurality of speech frames based on the speech waveform includes the following steps. Initially, a plurality of audio segments are generated by segmenting the speech waveform. Further, a plurality of speech segments are obtained from among the plurality of audio segments by removing non-speech signals from the plurality of audio segments. After removing non-speech signals, a plurality spectrally flattened speech segments are obtained based on the plurality of speech segments. Finally, the plurality of speech frames are generated by windowing the plurality of speech segments to hamming window.

At step 206 of the method 200, the transformed speech signal generation module 122, when executed by the one or more hardware processors 102 are configured by the programmed instructions to generate a transformed speech signal corresponding to each of the plurality of speech frames by applying Fourier Transform (FT) on each of the plurality of speech frames. FT is an integral transform that converts a function into a form that describes the frequencies present in the original function. The output of FT is a complex-valued function of frequency.

At step 208 of the method 200, the log Mel spectrogram generation module 124, when executed by the one or more hardware processors 102, is configured by the programmed instructions to generate a log Mel spectrogram associated with each of the plurality of speech frames by passing the transformed speech signal corresponding to each of the plurality of speech frames through a Mel filter bank and thereby computing logarithm of each output of the Mel-filter bank. The Mel scale aims to mimic non-linear human ear perception of sound. Human ears are more discriminative at lower frequencies and less discriminative at higher frequencies. Mel filter banks do exactly that by giving a better resolution at low frequencies and less at high.

At step 210 of the method 200, the speech waveform conversion module 126 when executed by the one or more hardware processors 102 are configured by the programmed instructions to convert the speech waveform into a corresponding textual information based on the log Mel spectrogram associated with each of the plurality of speech frames using a random noise augmented trained encoder-decoder model.

For example, the method steps for training the random noise augmented encoder-decoder model is as described as follows: Initially, a plurality of training log Mel spectrograms associated with a plurality of training speech waveforms are received by an encoder-decoder model. Further, a plurality of speech embeddings are extracted based on the plurality of training log Mel spectrograms from a plurality of hidden layers associated with the encoder-decoder model. Post extracting the plurality of speech embeddings, a set of random speech embeddings are selected from among the plurality of speech embeddings. Further, a plurality of augmented speech embeddings are generated by replacing the set of random speech embeddings with a randomly generated Gaussian noise. Finally, the encoder-decoder model is trained based on the plurality of augmented speech embeddings until a predefined threshold. For example, the model is trained for 100 epochs.

The conformer model of the present disclosure is implemented using End to end speech processing ESPNet toolkit with its Librispeech 100 hours recipe. The encoder of the conformer model has 12 layers and the decoder has 6 layers. The model dimension is 256 while number of attention heads is 4. Models were trained using Adam optimizer with β1 = 0.9, β2 = 0.98 and ε =10⁻⁹, which is along the lines of the optimizer. Warm up steps used is 25000. The models are trained for 100 epochs and the batch size was 32. A single Nvidia RTX 3090 GPU was used. No language model has been used for shallow fusion in this work. 300 subword tokens extracted from the training text served as output units. Features used for the model are log mel spectrograms with 80 dimensions along with the pitch. 3 way SP was used with speed factors of 0.9, 1.0 and 1.1 in all the experiments.

An example augmented embedding is shown in Table 1. Now referring to Table 1, 'e' indicates unchanged embedding and 'n' indicates Gaussian noise.

**Table 1**

| | | | |
|---|---|---|---|
| e | e | e | e |
| n | n | n | n |
| e | e | e | e |
| e | e | e | e |
| n | n | n | n |

**Experimentation:** The experiments were conducted on the Librispeech database. The models are trained on the Librispeech-clean-100 subset and observed that the Word Error Rate (WER) on the Librispeech test-clean and test-other sets. Table 2 summarizes the WER from different experiments. Now referring to Table 2, SP is Speed Perturbation, EAZ(x%)is Embedding Augmentation - Replace x% of total embeddings with zeros, EAN(x%)is Embedding Augmentation - Replace x% of total embeddings with Gaussian noise, SA is Spec Augment, Att is Attention, CTC is Connectionist Temporal Classification.

**Table 2**

| **System** | | **WER** | |
|---|---|---|---|
| Augmentation | Loss | Test-clean | Test-other |
| SP (Baseline) | Att | 9.2 | 27.4 |
| SP+EAZ(70%) | Att | 7.4 | 21.3 |
| SP+EAN(50%) | Att | 8.1 | 21.7 |
| SP+EAN(60%) | Att | 7.7 | 21.0 |
| SP+EAN(70%) | Att | 8.1 | 20.4 |
| SP+SA | Att | 8.1 | 20.0 |
| SP+SA+EAN(50%) | Att | 8.1 | 19.0 |
| SP+SA+EAN(60%) | Att | 7.9 | 18.5 |
| SP+SA+EAN(70%) | Att | 8.2 | 18.4 |
| SP+SA | Att + CTC | 7.7 | 19.7 |
| SP+SA+EAN(70%) | Att + CTC | 7.7 | 17.4 |

Now referring to Table 2, the baseline system with only 3-way speed perturbation resulted in WERs of 9.2% and 27.4% on Librispeech testclean and test-other sets respectively (see Table 2). On using embedding augmentation on top of speech perturbation, where 70% of the embeddings were replaced by zeros (SP+ EAZ(70%)), the WERs improve to 7.4% and 21.3% on Librispeech test-clean and test-other sets respectively. That translates to 19.6% relative improvement for test-clean set and 22.3% relative improvement on test-other set. This shows that the proposed embeddings augmentation (EA) can provide significant improvements.

Next set of results show the performance of embedding augmentation where a subset of the embeddings are replaced with Gaussian noise (EAN). The WERs are presented for policies where 50%, 60% and 70% of the embeddings were replaced with noise. It can be observed that all these policies result in better WERs than SP alone. On the Librispeech testother set, the WERs consistently reduces (21.7 → 21.0 →20.4) as we increase the number of embeddings to be replaced with noise (EAN(50% → 60% → 70%)). While the results on Librispeech test-clean set are significantly better than what is seen for baseline (SP) alone, they are worse than what is seen in case of EAZ. It seems to suggest that EAZ might be a better option for clean speech, while EAN , i.e., replacing embeddings with noise might be a better bet for mismatched speech. Since most of real-life use cases for ASR calls for dealing with mismatched speech, EAN (embedding augmentation with Gaussian noise) should be preferable. The best results of embedding augmentation with Gaussian noise is obtained for the policy EAN(70%), which results in 12% relative improvement (9.2 → 8.1) for test-clean set and 25.5% relative improvement (27.4 → 20.4) for test-other set. This shows the efficacy of the proposed embedding augmentation. The SP +SA provides slightly better (0.4% absolute) performance than SP +EAN(70%) on the test-other set while matching the performance on the test-clean set.

Next set of experiments show the efficacy of using EA on top of SA. It can be observed that significant improvement can be obtained by using both SA and EA. The performance keeps on improving till 70% of embeddings are replaced with noise2. It supports our original hypothesis that speech embeddings, which are different representations of the features, can open up possibility for further augmentation. The best performance obtained in this set of experiments was for EAN(70%). The relative improvement obtained over the baseline (SP) system are 10.9% and 32.8% on test-clean and test-other sets respectively. The relative improvement over SP + SA system on test-other set is 8% while the performance on test-clean is unchanged. It seems to suggest that in real world scenarios of mismatched speech data, employing embedding augmentation along with SA can provide significant gains. ESPNet toolkit provides a recipe for multi-task learning with CTC and attention (Att) loss. The CTC loss has a weight of 0.3 while the Att loss has a weight of 0.7. Using this multitask learning, again, significantly improves the performance of the system (19.7 → 17.4; Table 2) by 2.3% absolute for test-other.

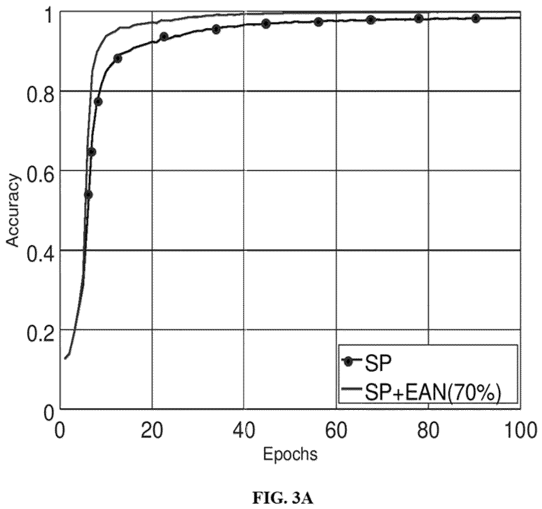

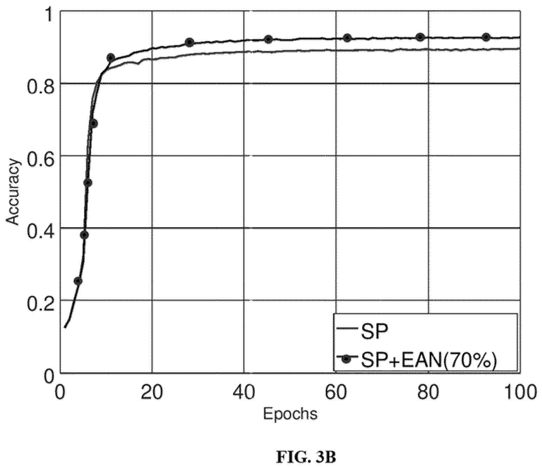

The effect of the disclosed speech embedding augmentation policy on the over-fitting problem is similar to that of SA. FIG. 3A and FIG. 3B show the training curves of the networks. It can be seen that the system with only SP quickly over-fits for the training set. The system with SP + EAN(70%), however does not over-fit. Looking at the training curves for validation data, the system with embedding augmentation provides much better accuracy on validation set than the baseline system. This shows that the system with embedding augmentation will work better for unseen and mismatched data.

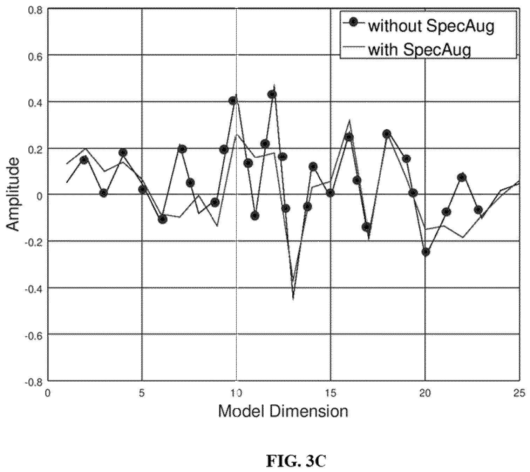

FIG. 3C shows a portion of an embedding with and without SA applied at the feature level (for clarity, only the first 25 dimensions of the 256 dimensional speech embedding is shown in FIG. 3C). It can be observed that at the embedding level the effect of SA can be modeled as additive noise. That is, if the embedding without SA is denoted as *̅e̅ₜ̅*̅ and the same with SA applied at feature level is denoted as ^{→}e't, then a vector ^{→}δt can be found such that *e̅'̅ₜ̅= e̅ₜ̅ + δ̅ₜ̅*. The speech embedding augmentation (EAZ, EAN) of the present disclosure can be viewed as a variation of SA where the signal-to-noise ratio (SNR) of the noise corruption is -∞. Whereas SA creates corrupted versions of the speech embeddings, the proposed augmentation policy creates missing embeddings and therefore the network trains without ever seeing the complete sequence of the data. In this sense, it is a harsher augmentation policy than SA. While SA does endeavor to create missing data conditions at the feature level, it does not translate well into the embedding level. Since the proposed augmentation policy creates missing and differing data at the embedding level, it can provide additional performance gains on top of SA as observed in our experiments.

It is also interesting to note that the network works better with 70% of the embeddings sequence replaced with noise. It seems to point towards the networks' over-reliance on the exact sequence information to make predictions. Since the sequence will never be the same even if the same person utters the same text twice, the network can be at a disadvantage if this aspect is neglected. The proposed speech embedding augmentation addresses this.

Using Librispeech 100 hours training set, it was observed that the augmentation scheme of the present disclosure improves Word Error Rate (WER) of the conformer ASR system with speed perturbation on the Librispeech test-clean and test-other sets by absolute 1.1% and 7.0% respectively. Further, it was observed that it can be used in conjunction with SpecAugment reducing the WER by absolute 1.6% on test-other set while maintaining the performance on the test-clean set. The WER on test-other set further reduces by absolute 1% when using multi-task learning with attention and CTC loss.

The written description describes the subject matter herein to enable any person skilled in the art to make and use the embodiments.

The embodiments of the present disclosure herein address the unresolved problem of augmented speech embeddings based automatic speech recognition. The present disclosure provides a new augmentation policy which works at the speech embedding level. Though simple, this policy is shown to be very effective, especially on unseen data. It works by forcing the network to learn without ever seeing the exact sequence of the embeddings. Though existing augmentation policies simulate the missing data problem at the feature level, they may not necessarily translate to simulating missing data at the embedding level. It was observed from experimental results that replacing embeddings with Gaussian noise (EAN) can work better for mismatched test scenarios and for unseen data.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means, and software means. The method embodiments described herein could be implemented in hardware and software. The device may also include software means. Alternatively, the embodiments may be implemented on different hardware devices, e.g., using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with the scope of the invention being indicated by the following claims.

## Claims

1. A processor-implemented method (200), the method comprising:
receiving (202), by one or more hardware processors, a speech waveform comprising a plurality of speech signals from an audio recording device;
generating (204), by the one or more hardware processors, a plurality of speech frames based on the speech waveform by preprocessing the speech waveform using a preprocessing technique;
generating (206), by the one or more hardware processors, a transformed speech signal corresponding to each of the plurality of speech frames by applying Fourier Transform, FT, on each of the plurality of speech frames;
generating (208), by the one or more hardware processors, a log Mel spectrogram associated with each of the plurality of speech frames by passing the transformed speech signal corresponding to each of the plurality of speech frames through a Mel filter bank and thereby computing logarithm of each output of the Mel-filter bank; and
converting (210), by the one or more hardware processors, the speech waveform into a corresponding textual information based on the log Mel spectrogram associated with each of the plurality of speech frames using a random noise augmented trained encoder-decoder model, wherein method steps for training the random noise augmented encoder-decoder model comprises:
receiving a plurality of training log Mel spectrograms associated with a plurality of training speech waveforms by an encoder-decoder model;
extracting a plurality of speech embeddings based on the plurality of training log Mel spectrograms from a plurality of hidden layers associated with the encoder-decoder model;
selecting a set of random speech embeddings from among the plurality of speech embeddings;
generating a plurality of augmented speech embeddings by replacing the set of random speech embeddings with a randomly generated Gaussian noise; and
training the encoder-decoder model based on the plurality of augmented speech embeddings until a predefined threshold.

2. The method of claim 1, wherein the preprocessing technique for generating the plurality of speech frames based on the speech waveform comprises:
generating a plurality of audio segments by segmenting the speech waveform using an audio segmentation technique;
obtaining a plurality of speech segments from among the plurality of audio segments by removing non-speech signals from the plurality of audio segments;
generating a plurality spectrally flattened speech segments based on the plurality of speech segments using an audio flattening technique; and
generating the plurality of speech frames by windowing the plurality of speech segments to hamming window.

3. A system (100) comprising:
at least one memory (104) storing programmed instructions; one or more Input /Output,I/O, interfaces (112); and one or more hardware processors (102) operatively coupled to the at least one memory (104), wherein the one or more hardware processors (102) are configured by the programmed instructions to:
receive a speech waveform comprising a plurality of speech signals from an audio recording device;
generate a plurality of speech frames based on the speech waveform by preprocessing the speech waveform using a preprocessing technique;
generate a transformed speech signal corresponding to each of the plurality of speech frames by applying Fourier Transform (FT) on each of the plurality of speech frames;
generate a log Mel spectrogram associated with each of the plurality of speech frames by passing the transformed speech signal corresponding to each of the plurality of speech frames through a Mel filter bank and thereby computing logarithm of each output of the Mel-filter bank; and
convert the speech waveform into a corresponding textual information based on the log Mel spectrogram associated with each of the plurality of speech frames using a random noise augmented trained encoder-decoder model, wherein method steps for training the random noise augmented encoder-decoder model comprises:
receiving a plurality of training log Mel spectrograms associated with a plurality of training speech waveforms by an encoder-decoder model;
extracting a plurality of speech embeddings based on the plurality of training log Mel spectrograms from a plurality of hidden layers associated with the encoder-decoder model;
selecting a set of random speech embeddings from among the plurality of speech embeddings;
generating a plurality of augmented speech embeddings by replacing the set of random speech embeddings with a randomly generated Gaussian noise; and
training the encoder-decoder model based on the plurality of augmented speech embeddings until a predefined threshold.

4. The system of claim 3, wherein the preprocessing technique for generating the plurality of speech frames based on the speech waveform comprises:
generating a plurality of audio segments by segmenting the speech waveform using an audio segmentation technique;
obtaining a plurality of speech segments from among the plurality of audio segments by removing non-speech signals from the plurality of audio segments;
generating a plurality spectrally flattened speech segments based on the plurality of speech segments using an audio flattening technique; and
generating the plurality of speech frames by windowing the plurality of speech segments to hamming window.

5. One or more non-transitory machine-readable information storage mediums comprising one or more instructions which when executed by one or more hardware processors cause:
receiving, a speech waveform comprising a plurality of speech signals from an audio recording device;
generating, a plurality of speech frames based on the speech waveform by preprocessing the speech waveform using a preprocessing technique;
generating, a transformed speech signal corresponding to each of the plurality of speech frames by applying Fourier Transform, FT, on each of the plurality of speech frames;
generating, a log Mel spectrogram associated with each of the plurality of speech frames by passing the transformed speech signal corresponding to each of the plurality of speech frames through a Mel filter bank and thereby computing logarithm of each output of the Mel-filter bank; and
converting, the speech waveform into a corresponding textual information based on the log Mel spectrogram associated with each of the plurality of speech frames using a random noise augmented trained encoder-decoder model, wherein method steps for training the random noise augmented encoder-decoder model comprises:
receiving a plurality of training log Mel spectrograms associated with a plurality of training speech waveforms by an encoder-decoder model;
extracting a plurality of speech embeddings based on the plurality of training log Mel spectrograms from a plurality of hidden layers associated with the encoder-decoder model;
selecting a set of random speech embeddings from among the plurality of speech embeddings;
generating a plurality of augmented speech embeddings by replacing the set of random speech embeddings with a randomly generated Gaussian noise; and
training the encoder-decoder model based on the plurality of augmented speech embeddings until a predefined threshold.

6. The one or more non-transitory machine readable information storage mediums of claim 5.
wherein the preprocessing technique for generating the plurality of speech frames based on the speech waveform comprises:
generating a plurality of audio segments by segmenting the speech waveform using an audio segmentation technique;
obtaining a plurality of speech segments from among the plurality of audio segments by removing non-speech signals from the plurality of audio segments;
generating a plurality spectrally flattened speech segments based on the plurality of speech segments using an audio flattening technique; and
generating the plurality of speech frames by windowing the plurality of speech segments to hamming window.

## Patentansprüche

1. Prozessorimplementiertes Verfahren (200), wobei das Verfahren umfasst:
Empfangen (202), durch einen oder mehrere Hardwareprozessoren, einer Sprachwellenform, die eine Mehrzahl von Sprachsignalen umfasst, von einer Audioaufzeichnungsvorrichtung;
Erzeugen (204), durch den einen oder die mehreren Hardwareprozessoren, einer Mehrzahl von Sprachrahmen basierend auf der Sprachwellenform durch Vorverarbeiten der Sprachwellenform unter Verwendung einer Vorverarbeitungstechnik;
Erzeugen (206), durch den einen oder die mehreren Hardwareprozessoren, eines transformierten Sprachsignals, das jedem der Mehrzahl von Sprachrahmen entspricht, durch Anwenden einer Fourier-Transformation, FT, auf jeden der Mehrzahl von Sprachrahmen;
Erzeugen (208), durch den einen oder die mehreren Hardwareprozessoren, eines Log-Mel-Spektrogramms, das jedem der Mehrzahl von Sprachrahmen zugeordnet ist, durch Leiten des transformierten Sprachsignals, das jedem der Mehrzahl von Sprachrahmen entspricht, durch eine Mel-Filterbank und dadurch Berechnen eines Logarithmus jeder Ausgabe der Mel-Filterbank; und
Umwandeln (210), durch den einen oder die mehreren Hardwareprozessoren, der Sprachwellenform in eine entsprechende Textinformation basierend auf dem Log-Mel-Spektrogramm, das jedem der Mehrzahl von Sprachrahmen zugeordnet ist, unter Verwendung eines mit Zufallsrauschen erweiterten trainierten Codierer-Decodierer-Modells, wobei Verfahrensschritte zum Trainieren des mit Zufallsrauschen erweiterten Codierer-Decodierer-Modells umfassen:
Empfangen einer Mehrzahl von Trainings-Log-Mel-Spektrogrammen, die einer Mehrzahl von Trainingssprachwellenformen zugeordnet sind, durch ein Codierer-Decodierer-Modell;
Extrahieren einer Mehrzahl von Spracheinbettungen basierend auf der Mehrzahl von Trainings-Log-Mel-Spektrogrammen aus einer Mehrzahl von verborgenen Schichten, die dem Codierer-Decodierer-Modell zugeordnet sind;
Auswählen eines Satzes von zufälligen Spracheinbettungen aus der Mehrzahl von Spracheinbettungen;
Erzeugen einer Mehrzahl von erweiterten Spracheinbettungen durch Ersetzen des Satzes von zufälligen Spracheinbettungen durch ein zufällig erzeugtes Gaußsches Rauschen; und
Trainieren des Codierer-Decodierer-Modells basierend auf der Mehrzahl von erweiterten Spracheinbettungen bis zu einem vordefinierten Schwellenwert.

2. Verfahren nach Anspruch 1, wobei die Vorverarbeitungstechnik zum Erzeugen der Mehrzahl von Sprachrahmen basierend auf der Sprachwellenform umfasst:
Erzeugen einer Mehrzahl von Audiosegmenten durch Segmentieren der Sprachwellenform unter Verwendung einer Audiosegmentierungstechnik;
Erhalten einer Mehrzahl von Sprachsegmenten aus der Mehrzahl von Audiosegmenten durch Entfernen von Nicht-Sprachsignalen aus der Mehrzahl von Audiosegmenten;
Erzeugen einer Mehrzahl von spektral abgeflachten Sprachsegmenten basierend auf der Mehrzahl von Sprachsegmenten unter Verwendung einer Audioabflachungstechnik; und
Erzeugen der Mehrzahl von Sprachrahmen durch Fenstern der Mehrzahl von Sprachsegmenten zu einem Hamming-Fenster.

3. System (100), umfassend:
mindestens einen Speicher (104), der programmierte Anweisungen speichert; eine oder mehrere Eingabe/Ausgabe-, E/A-, Schnittstellen (112); und einen oder mehrere Hardwareprozessoren (102), die betriebsfähig mit dem mindestens einen Speicher (104) gekoppelt sind, wobei der eine oder die mehreren Hardwareprozessoren (102) durch die programmierten Anweisungen konfiguriert sind zum:
Empfangen einer Sprachwellenform, die eine Mehrzahl von Sprachsignalen umfasst, von einer Audioaufzeichnungsvorrichtung;
Erzeugen einer Mehrzahl von Sprachrahmen basierend auf der Sprachwellenform durch Vorverarbeiten der Sprachwellenform unter Verwendung einer Vorverarbeitungstechnik;
Erzeugen eines transformierten Sprachsignals, das jedem der Mehrzahl von Sprachrahmen entspricht, durch Anwenden einer Fourier-Transformation (FT) auf jeden der Mehrzahl von Sprachrahmen;
Erzeugen eines Log-Mel-Spektrogramms, das jedem der Mehrzahl von Sprachrahmen zugeordnet ist, durch Leiten des transformierten Sprachsignals, das jedem der Mehrzahl von Sprachrahmen entspricht, durch eine Mel-Filterbank und dadurch Berechnen eines Logarithmus jeder Ausgabe der Mel-Filterbank; und
Umwandeln der Sprachwellenform in eine entsprechende Textinformation basierend auf dem Log-Mel-Spektrogramm, das jedem der Mehrzahl von Sprachrahmen zugeordnet ist, unter Verwendung eines mit Zufallsrauschen erweiterten trainierten Codierer-Decodierer-Modells, wobei Verfahrensschritte zum Trainieren des mit Zufallsrauschen erweiterten Codierer-Decodierer-Modells umfassen:
Empfangen einer Mehrzahl von Trainings-Log-Mel-Spektrogrammen, die einer Mehrzahl von Trainingssprachwellenformen zugeordnet sind, durch ein Codierer-Decodierer-Modell;
Extrahieren einer Mehrzahl von Spracheinbettungen basierend auf der Mehrzahl von Trainings-Log-Mel-Spektrogrammen aus einer Mehrzahl von verborgenen Schichten, die dem Codierer-Decodierer-Modell zugeordnet sind;
Auswählen eines Satzes von zufälligen Spracheinbettungen aus der Mehrzahl von Spracheinbettungen;
Erzeugen einer Mehrzahl von erweiterten Spracheinbettungen durch Ersetzen des Satzes von zufälligen Spracheinbettungen durch ein zufällig erzeugtes Gaußsches Rauschen; und
Trainieren des Codierer-Decodierer-Modells basierend auf der Mehrzahl von erweiterten Spracheinbettungen bis zu einem vordefinierten Schwellenwert.

4. System nach Anspruch 3, wobei die Vorverarbeitungstechnik zum Erzeugen der Mehrzahl von Sprachrahmen basierend auf der Sprachwellenform umfasst:
Erzeugen einer Mehrzahl von Audiosegmenten durch Segmentieren der Sprachwellenform unter Verwendung einer Audiosegmentierungstechnik;
Erhalten einer Mehrzahl von Sprachsegmenten aus der Mehrzahl von Audiosegmenten durch Entfernen von Nicht-Sprachsignalen aus der Mehrzahl von Audiosegmenten;
Erzeugen einer Mehrzahl von spektral abgeflachten Sprachsegmenten basierend auf der Mehrzahl von Sprachsegmenten unter Verwendung einer Audioabflachungstechnik; und
Erzeugen der Mehrzahl von Sprachrahmen durch Fenstern der Mehrzahl von Sprachsegmenten zu einem Hamming-Fenster.

5. Ein oder mehrere nichtflüchtige maschinenlesbare Informationsspeichermedien, die eine oder mehrere Anweisungen umfassen, die, wenn sie durch einen oder mehrere Hardwareprozessoren ausgeführt werden, bewirken:
Empfangen einer Sprachwellenform, die eine Mehrzahl von Sprachsignalen umfasst, von einer Audioaufzeichnungsvorrichtung;
Erzeugen einer Mehrzahl von Sprachrahmen basierend auf der Sprachwellenform durch Vorverarbeiten der Sprachwellenform unter Verwendung einer Vorverarbeitungstechnik;
Erzeugen eines transformierten Sprachsignals, das jedem der Mehrzahl von Sprachrahmen entspricht, durch Anwenden einer Fourier-Transformation, FT, auf jeden der Mehrzahl von Sprachrahmen;
Erzeugen eines Log-Mel-Spektrogramms, das jedem der Mehrzahl von Sprachrahmen zugeordnet ist, durch Leiten des transformierten Sprachsignals, das jedem der Mehrzahl von Sprachrahmen entspricht, durch eine Mel-Filterbank und dadurch Berechnen eines Logarithmus jeder Ausgabe der Mel-Filterbank; und
Umwandeln der Sprachwellenform in eine entsprechende Textinformation basierend auf dem Log-Mel-Spektrogramm, das jedem der Mehrzahl von Sprachrahmen zugeordnet ist, unter Verwendung eines mit Zufallsrauschen erweiterten trainierten Codierer-Decodierer-Modells, wobei Verfahrensschritte zum Trainieren des mit Zufallsrauschen erweiterten Codierer-Decodierer-Modells umfassen:
Empfangen einer Mehrzahl von Trainings-Log-Mel-Spektrogrammen, die einer Mehrzahl von Trainingssprachwellenformen zugeordnet sind, durch ein Codierer-Decodierer-Modell;
Extrahieren einer Mehrzahl von Spracheinbettungen basierend auf der Mehrzahl von Trainings-Log-Mel-Spektrogrammen aus einer Mehrzahl von verborgenen Schichten, die dem Codierer-Decodierer-Modell zugeordnet sind;
Auswählen eines Satzes von zufälligen Spracheinbettungen aus der Mehrzahl von Spracheinbettungen;
Erzeugen einer Mehrzahl von erweiterten Spracheinbettungen durch Ersetzen des Satzes von zufälligen Spracheinbettungen durch ein zufällig erzeugtes Gaußsches Rauschen; und
Trainieren des Codierer-Decodierer-Modells basierend auf der Mehrzahl von erweiterten Spracheinbettungen bis zu einem vordefinierten Schwellenwert.

6. Ein oder mehrere nichtflüchtige maschinenlesbare Informationsspeichermedien nach Anspruch 5, wobei die Vorverarbeitungstechnik zum Erzeugen der Mehrzahl von Sprachrahmen basierend auf der Sprachwellenform umfasst:
Erzeugen einer Mehrzahl von Audiosegmenten durch Segmentieren der Sprachwellenform unter Verwendung einer Audiosegmentierungstechnik;
Erhalten einer Mehrzahl von Sprachsegmenten aus der Mehrzahl von Audiosegmenten durch Entfernen von Nicht-Sprachsignalen aus der Mehrzahl von Audiosegmenten;
Erzeugen einer Mehrzahl von spektral abgeflachten Sprachsegmenten basierend auf der Mehrzahl von Sprachsegmenten unter Verwendung einer Audioabflachungstechnik; und
Erzeugen der Mehrzahl von Sprachrahmen durch Fenstern der Mehrzahl von Sprachsegmenten zu einem Hamming-Fenster.

## Revendications

1. Procédé mis en œuvre par processeur (200), le procédé comprenant :
la réception (202), par un ou plusieurs processeurs matériels, d'une forme d'onde vocale comprenant une pluralité de signaux vocaux provenant d'un dispositif d'enregistrement audio ;
la génération (204), par les un ou plusieurs processeurs matériels, d'une pluralité de trames vocales sur la base de la forme d'onde vocale par prétraitement de la forme d'onde vocale en utilisant une technique de prétraitement ;
la génération (206), par les un ou plusieurs processeurs matériels, d'un signal vocal transformé correspondant à chacune de la pluralité de trames vocales par application d'une transformée de Fourier, FT, sur chacune de la pluralité de trames vocales ;
la génération (208), par les un ou plusieurs processeurs matériels, d'un spectrogramme log-Mel associé à chacune de la pluralité de trames vocales par passage du signal vocal transformé correspondant à chacune de la pluralité de trames vocales à travers une banque de filtres de Mel et ainsi le calcul du logarithme de chaque sortie de la banque de filtres de Mel ; et
la conversion (210), par les un ou plusieurs processeurs matériels, de la forme d'onde vocale en une information textuelle correspondante sur la base du spectrogramme log-Mel associé à chacune de la pluralité de trames vocales en utilisant un modèle codeur-décodeur entraîné à bruit aléatoire augmenté, dans lequel les étapes de procédé pour entraîner le modèle codeur-décodeur à bruit aléatoire augmenté comprennent :
la réception d'une pluralité de spectrogrammes log-Mel d'entraînement associés à une pluralité de formes d'onde vocales d'entraînement par un modèle codeur-décodeur ;
l'extraction d'une pluralité d'intégrations vocales sur la base de la pluralité de spectrogrammes log-Mel d'entraînement à partir d'une pluralité de couches cachées associées au modèle codeur-décodeur ;
la sélection d'un ensemble d'intégrations vocales aléatoires parmi la pluralité d'intégrations vocales ;
la génération d'une pluralité d'intégrations vocales augmentées par remplacement de l'ensemble d'intégrations vocales aléatoires par un bruit gaussien généré de manière aléatoire ; et
l'entraînement du modèle codeur-décodeur sur la base de la pluralité d'intégrations vocales augmentées jusqu'à un seuil prédéfini.

2. Procédé selon la revendication 1, dans lequel la technique de prétraitement pour générer la pluralité de trames vocales sur la base de la forme d'onde vocale comprend :
la génération d'une pluralité de segments audio par segmentation de la forme d'onde vocale en utilisant une technique de segmentation audio ;
l'obtention d'une pluralité de segments vocaux parmi la pluralité de segments audio par suppression de signaux non vocaux de la pluralité de segments audio ;
la génération d'une pluralité de segments vocaux spectralement aplatis sur la base de la pluralité de segments vocaux en utilisant une technique d'aplatissement audio ; et
la génération de la pluralité de trames vocales par fenêtrage de la pluralité de segments vocaux en fenêtre de Hamming.

3. Système (100) comprenant :
au moins une mémoire (104) stockant des instructions programmées ; une ou plusieurs interfaces d'entrée/sortie, I/O, (112) ; et un ou plusieurs processeurs matériels (102) couplés de manière opérationnelle à l'au moins une mémoire (104), dans lequel les un ou plusieurs processeurs matériels (102) sont configurés par les instructions programmées pour :
recevoir une forme d'onde vocale comprenant une pluralité de signaux vocaux provenant d'un dispositif d'enregistrement audio ;
générer une pluralité de trames vocales sur la base de la forme d'onde vocale par prétraitement de la forme d'onde vocale en utilisant une technique de prétraitement ;
générer un signal vocal transformé correspondant à chacune de la pluralité de trames vocales par application d'une transformée de Fourier (FT) sur chacune de la pluralité de trames vocales ;
générer un spectrogramme log-Mel associé à chacune de la pluralité de trames vocales par passage du signal vocal transformé correspondant à chacune de la pluralité de trames vocales à travers une banque de filtres de Mel et ainsi le calcul du logarithme de chaque sortie de la banque de filtres de Mel ; et
convertir la forme d'onde vocale en une information textuelle correspondante sur la base du spectrogramme log-Mel associé à chacune de la pluralité de trames vocales en utilisant un modèle codeur-décodeur entraîné à bruit aléatoire augmenté, dans lequel les étapes de procédé pour entraîner le modèle codeur-décodeur à bruit aléatoire augmenté comprennent :
la réception d'une pluralité de spectrogrammes log-Mel d'entraînement associés à une pluralité de formes d'onde vocales d'entraînement par un modèle codeur-décodeur ;
l'extraction d'une pluralité d'intégrations vocales sur la base de la pluralité de spectrogrammes log-Mel d'entraînement à partir d'une pluralité de couches cachées associées au modèle codeur-décodeur ;
la sélection d'un ensemble d'intégrations vocales aléatoires parmi la pluralité d'intégrations vocales ;
la génération d'une pluralité d'intégrations vocales augmentées par remplacement de l'ensemble d'intégrations vocales aléatoires par un bruit gaussien généré de manière aléatoire ; et
l'entraînement du modèle codeur-décodeur sur la base de la pluralité d'intégrations vocales augmentées jusqu'à un seuil prédéfini.

4. Système selon la revendication 3, dans lequel la technique de prétraitement pour générer la pluralité de trames vocales sur la base de la forme d'onde vocale comprend :
la génération d'une pluralité de segments audio par segmentation de la forme d'onde vocale en utilisant une technique de segmentation audio ;
l'obtention d'une pluralité de segments vocaux parmi la pluralité de segments audio par suppression de signaux non vocaux de la pluralité de segments audio ;
la génération d'une pluralité de segments vocaux spectralement aplatis sur la base de la pluralité de segments vocaux en utilisant une technique d'aplatissement audio ; et
la génération de la pluralité de trames vocales par fenêtrage de la pluralité de segments vocaux en fenêtre de Hamming.

5. Un ou plusieurs supports de stockage d'informations lisibles par machine non transitoires comprenant une ou plusieurs instructions qui, lorsqu'elles sont exécutées par un ou plusieurs processeurs matériels, amènent :
la réception d'une forme d'onde vocale comprenant une pluralité de signaux vocaux provenant d'un dispositif d'enregistrement audio ;
la génération d'une pluralité de trames vocales sur la base de la forme d'onde vocale par prétraitement de la forme d'onde vocale en utilisant une technique de prétraitement ;
la génération d'un signal vocal transformé correspondant à chacune de la pluralité de trames vocales par application d'une transformée de Fourier, FT, sur chacune de la pluralité de trames vocales ;
la génération d'un spectrogramme log-Mel associé à chacune de la pluralité de trames vocales par passage du signal vocal transformé correspondant à chacune de la pluralité de trames vocales à travers une banque de filtres de Mel et ainsi le calcul du logarithme de chaque sortie de la banque de filtres de Mel ; et
la conversion de la forme d'onde vocale en une information textuelle correspondante sur la base du spectrogramme log-Mel associé à chacune de la pluralité de trames vocales en utilisant un modèle codeur-décodeur entraîné à bruit aléatoire augmenté, dans lequel les étapes de procédé pour entraîner le modèle codeur-décodeur à bruit aléatoire augmenté comprennent :
la réception d'une pluralité de spectrogrammes log-Mel d'entraînement associés à une pluralité de formes d'onde vocales d'entraînement par un modèle codeur-décodeur ;
l'extraction d'une pluralité d'intégrations vocales sur la base de la pluralité de spectrogrammes log-Mel d'entraînement à partir d'une pluralité de couches cachées associées au modèle codeur-décodeur ;
la sélection d'un ensemble d'intégrations vocales aléatoires parmi la pluralité d'intégrations vocales ;
la génération d'une pluralité d'intégrations vocales augmentées par remplacement de l'ensemble d'intégrations vocales aléatoires par un bruit gaussien généré de manière aléatoire ; et
l'entraînement du modèle codeur-décodeur sur la base de la pluralité d'intégrations vocales augmentées jusqu'à un seuil prédéfini.

6. Un ou plusieurs supports de stockage d'informations lisibles par machine non transitoires selon la revendication 5, dans lequel la technique de prétraitement pour générer la pluralité de trames vocales sur la base de la forme d'onde vocale comprend :
la génération d'une pluralité de segments audio par segmentation de la forme d'onde vocale en utilisant une technique de segmentation audio ;
l'obtention d'une pluralité de segments vocaux parmi la pluralité de segments audio par suppression de signaux non vocaux de la pluralité de segments audio ;
la génération d'une pluralité de segments vocaux spectralement aplatis sur la base de la pluralité de segments vocaux en utilisant une technique d'aplatissement audio ; et
la génération de la pluralité de trames vocales par fenêtrage de la pluralité de segments vocaux en fenêtre de Hamming.
